# EUROPÄISCHE PATENTSCHRIFT

(11) **EP 0 279 233 B1**
(45) Veröffentlichungstag und Bekanntmachung des Hinweises auf die Patenterteilung: **16.06.1993**
(21) Anmeldenummer: 88101096.1
(22) Anmeldetag: 26.01.1988
(51) Int. Cl.: H04M 1/02, H04M 1/72

(54) **Bedienteil für ein Mobilfunkgerät**
Keyboard for a mobile radio telephone
Clavier de commande pour poste de radiotéléphonie

(30) Priorität: 16.02.1987 DE 3704863
(43) Veröffentlichungstag der Anmeldung: 24.08.1988
(73) Patentinhaber: SIEMENS AKTIENGESELLSCHAFT, 80333 München (DE)
(72) Erfinder: Raab, Alfons, Dipl.-Ing., D-8000 München 81 (DE); Stögmüller, Rupert, Dipl.-Ing. (FH), D-8011 Poing (DE); Skrypalle, Ulrich, D-8000 München 70 (DE)

(56) Entgegenhaltungen:
- EP-A- 0 057 892
- DE-A- 3 413 604
- GB-A- 2 154 393
- US-A- 4 481 382
- IBM TECHNICAL DISCLOSURE BULLETIN, Band 21, Nr. 2, Juli 1978, Seiten 442-444, New York, US; S.E. BIGBIE et al.: "Programmable key/display/switch device"
- TELCOM REPORT, Band 10, Nr. 2, März/April 1987, Seiten 99-101, München, DE; K. WAGENLEHNER: "Bedienung des modernen Mobiltelefons - einfach und logisch"

## Beschreibung

Die Erfindung bezieht sich auf ein Bedienteil für ein Mobilfunkgerät mit einem Tasten- und einem Anzeigefeld, wobei das Tastenfeld eine Gruppe von Wähltasten und eine Gruppe von Funktionstasten umfaßt und in dem Anzeigefeld die jeweils angesteuerten Funktionen visuell darstellbar sind. Eine solche Anordnung ist im wesentlichen durch die US-A-4 481 382 bekannt, in der ein programmierbares Telefonsystem beschrieben ist.

Mit der Einführung der zellularen Mobilfunknetze werden allgemein die Voraussetzungen geschaffen, diesen modernen Kommunikationsdienst einer hohen Teilnehmerzahl zugänglich zu machen. Als Terminal soll das Autotelefon dem Benutzer dabei möglichst denselben Bedienungskomfort bieten, wie er ihn von den modernen Telefonen im Büro gewöhnt ist. Allerdings sind die Autotelefon-Bedienungsprozeduren den besonderen technischen und ergonomischen Anforderungen des Umfeldes Auto anzupassen. Das Umfeld Auto bedeutet nämlich eine räumliche und vor allem auch zeitliche Begrenzung der Handhabung, da der Telefonbenutzer seine Hauptaufmerksamkeit dem Autofahren widmen muß.

Bedienteile können dabei in unterschiedlicher Weise ausgebildet sein, nämlich z.B. als Bedienhörer, bei dem alle elektrischen und mechanischen Elemente mit der Wähltastatur, Anzeigefeld und Gabelschalter im Telefon-Handapparat integriert sind, oder als Gehäuse quaderförmiger Gestalt für die Aufnahme der verschiedenen Elemente sowie des Tasten- und Anzeigefeldes, dem ein mit dem Gehäuse über ein Anschlußkabel verbundener Telefon-Handapparat zugeordnet ist. Ein Bedienhörer der beschriebenen Art ist beispielsweise aus der DE-AS 30 15 050 bekannt, ein Bedienteil als spezielles Gehäuse aus dem deutschen GM 83 09 667.

Der Erfindung liegt die Aufgabe zugrunde, ein Bedienteil für ein Mobilfunkgerät zu schaffen, bei dem unter Berücksichtigung der Besonderheiten seines Umfeldes in einfacher Weise eine übersichtliche, anschauliche und verständliche Bedienung durchführbar ist.

Diese Aufgabe wird gemäß der Erfindung in der Weise gelöst, daß die Gruppe der Funktionstasten wenigstens zwei Tasten enthält, durch die, ausgehend von einer normalen Funktionsebene, in der die genannten Wähltasten zur Eingabe von Wahlkennzeichen dienen, weitere Funktionsebenen ansteuerbar sind, in denen den Wähltasten in an sich bekannter Weise andere Funktionen zugeordnet sind, und daß die Gruppe der Funktionstasten eine weitere Taste enthält, durch die innerhalb der jeweiligen Funktionsebene spezielle Funktionsbereiche ansteuerbar sind.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

Es zeigen
- Figuren 1 und 2: ein als Bedienhörer ausgebildetes Bedienteil in einer Draufsicht und einer Seitenansicht und
- Figur 3: in einem Blockschaltbild den Aufbau der verschiedenen Funktionsebenen.

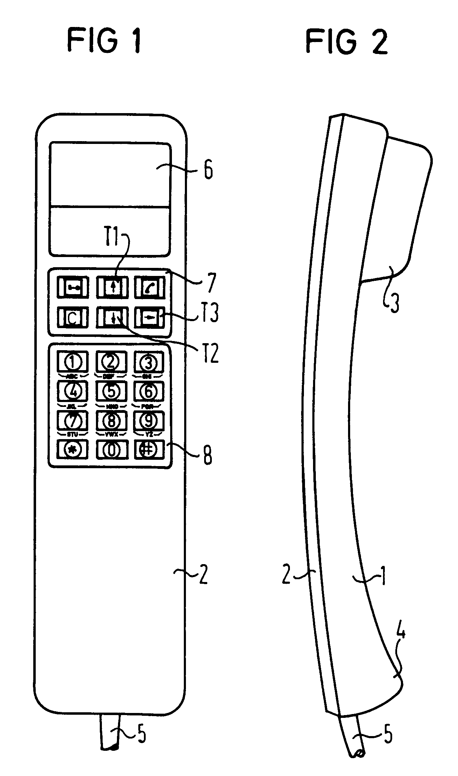

Das Bedienteil nach den Figuren 1 und 2 ist als Bedienhörer ausgebildet, bei dem alle elektrischen und mechanischen Elemente sowie Tasten- und Anzeigefelder und Gabelschalter im Telefon-Handapparat integriert sind. Der Telefon-Handapparat von flacher, leicht gekrümmter Form besteht aus zwei halbschalenförmigen Gehäuseteilen 1,2 , die mit ihrer offenen Seite aufeinanderliegen. Im Unterteil 1 sind jeweils in Erhöhungen 3,4 in einem Endbereich eine Hörmuschel und im anderen Endbereich, an das ein Telefonanschlußkabel 5 herangeführt ist, eine Sprechmuschel angeordnet. Auf der Oberseite des Oberteils 2 sind im oberen, der die Hörmuschel enthaltenden Erhöhung 3 gegenüberliegenden Bereich ein Anzeigenfeld 6 und darunterliegend, sich bis über die Mitte hinaus erstreckend, zwei Tastenfelder 7,8 angeordnet, von denen das kleinere, dem Anzeigefeld 6 benachbarte Tastenfeld 7 eine Gruppe von Funktionstasten und das darunter angeordnete, größere Tastenfeld 8 eine Gruppe von Wähltasten umfaßt.

Aus der Gruppe der Funktionstasten 7 sind drei als für die Erfindung wesentliche Tasten herauszuheben, nämlich die mit einem aufwärts, einem abwärts und einem waagerecht gerichteten Pfeil versehenen Tasten T1, T2, T3. Durch die beiden Tasten T1, T2 sind, ausgehend von einer normalen Funktionsebene I, in der die Wähltasten 8 zur Eingabe von Wahlkennzeichen dienen, weitere Funktionsebenen II, III, IV ansteuerbar, in denen den Wähltasten 8 andere Funktionen, z.B. Programmiereingabe, zugeordnet sind. Für die unterschiedlichen Funktionen sind die Wähltasten 8 unterschiedlich markiert, nämlich mit Ziffern-Symbolen auf den Tasten selbst für die Wahleingabe und mit Buchstaben-Symbolen unterhalb der jeweiligen Taste, beispielsweise für die Programmiereingabe. Die Buchstaben-Symbole sind dabei durch eine entsprechende Kennzeichnung, nämlich eine klammerartige Linienführung, als zu der betreffenden Taste gehörend markiert. Für eine leichte Erkennbarkeit und gute Übersichtlichkeit ist es dabei günstig, die Funktionstasten T1, T2 für die Ansteuerung der verschiedenen Funktionsebenen sowie die Funktionstaste T3, durch die innerhalb einer Funktionsebene liegende Funktionsbereiche ansteuerbar sind, in gleicher Weise wie die Kennzeichnungen für die Buchstaben-Symbole, beispielsweise durch gleiche Farbgebung, als funktionsmäßig zusammengehörig zu markieren. Die durch die Tasten T1, T2 jeweils angesteuerten Funktionsebenen sowie die innerhalb einer Funktionsebene durch die Taste T3 angesteuerten speziellen Funktionsbereiche sind im Anzeigefeld 6 visuell darstellbar.

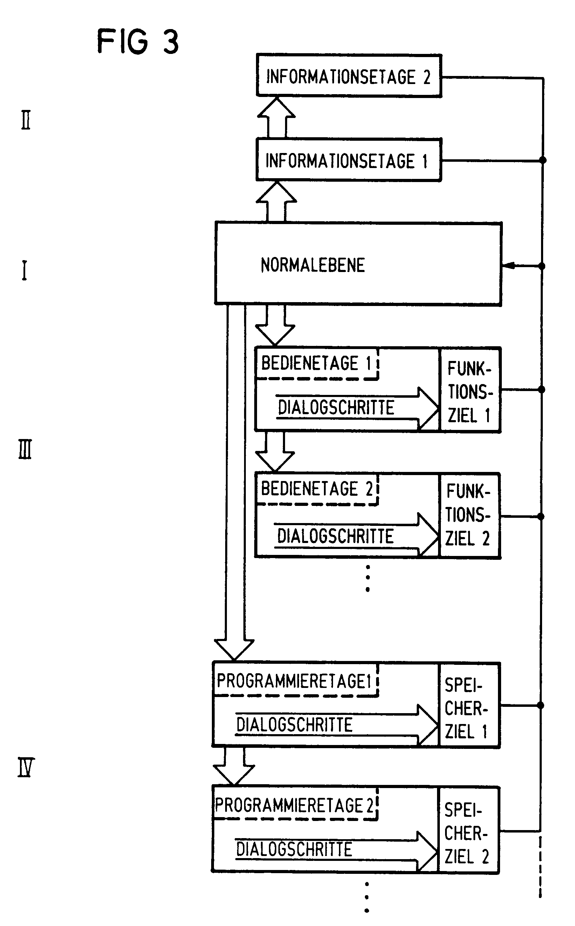

Anhand des Blockschaltbildes nach Figur 3 sollen der Aufbau und die Einstellmöglichkeiten der einzelnen Funktionsebenen erläutert werden. Die Normalebene I bezeichnet die normale Funktionsebene, in der die Wähltasten zur Eingabe von Wahlkennzeichen dienen. Sie wird bei jedem Einschalten des Gerätes automatisch erreicht. Nach Einstellen der Rufnummer wird durch Drücken der Wähltaste der Ruf abgesetzt. Oberhalb dieser Ebene I befindet sich eine Informationsebene II, die durch die mit dem Aufwärtspfeil versehene Taste T1 ansteuerbar ist. Diese im dargestellten Beispiel in zwei Etagen untergliederte Informationsebene, deren einzelne Etagen schrittweise ansteuerbar sind, enthält einen sogenannten Informationsblock, in dem ausschließlich Zusatzanzeigen erfaßt sind, z. B. die Anzeige der eigenen Telefonnummer oder die Anzeige der Empfangsfeldstärke.

Die Funktionsebenen unterhalb der Normalebene, die ebenfalls in mehrere Etagen unterteilt sind, sind als Bedienebene III und Programmierebene IV bezeichnet. Die einzelnen Ebenen sind jeweils einzeln ansteuerbar durch die mit dem Abwärtspfeil versehene Taste T2, wobei ein kurzer Tastendruck zur Bedienebene III und ein längerer Tastendruck zur Programmierebene IV führt. Die einzelnen Etagen innerhalb dieser Ebenen sind wiederum schrittweise durch die Taste T2 ansteuerbar, wobei ein stufenweises Vorgehen nach Benutzungsprioritäten vorgesehen ist. Die Bedien- und Programmierebene bzw. deren einzelne untergliederte Etagen bestehen aus jeweils mehreren Funktionsbereichen, die durch die mit dem waagerechten Pfeil versehenen Taste T3 ansteuerbar sind.

Der Bedienblock enthält beispielsweise Namen und Telefonnummern von Teilnehmern, die mittels der Tastatur abrufbar sind. Hierbei wird durch Betätigung der mit dem waagerechten Pfeil versehenen Taste T3 der entsprechende Funktionsbereich innerhalb einer Funktionsetage als Funktionsziel eingestellt. In entsprechender Weise erfolgt in der Programmierebene die Eingabe von zu speichernden Informationen in den sogenannten Programmierblock. Von jeder Position innerhalb der Bedien- und Programmierungsebenen ist mit der mit einem Aufwärtspfeil versehenen Taste T1 eine unmittelbare Rückstellung in die Normalebene möglich.

## Patentansprüche

1. Bedienteil für ein Mobilfunkgerät mit einem Tasten- und einem Anzeigefeld, wobei das Tastenfeld eine Gruppe von Wähltasten (8) und eine Gruppe von Funktionstasten (7) zum Einstellen bestimmter Funktionen umfaßt und in dem Anzeigefeld (6) die jeweils angesteuerten Funktionen visuell darstellbar sind,
**dadurch gekennzeichnet**,
daß die Gruppe der Funktionstasten (7) wenigstens zwei Tasten (T1, T2) enthält, durch die ausgehend von einer normalen Funktionsebene (I), in der die genannten Wähltasten zur Eingabe von Wahlkennzeichen dienen, weitere Funktionsebenen (Informationsebene (II), Bedienebene (III) und Programmierebene (IV)) ansteuerbar sind, in denen den Wähltasten in an sich bekannter Weise andere Funktionen zugeordnet sind, und daß die Gruppe der Funktionstasten eine weitere Taste (3) enthält, durch die innerhalb der jeweiligen, durch die erstgenannten Tasten (T1, T2) eingestellten Funktionsebenen spezielle Funktionsbereiche ansteuerbar sind.

2. Bedienteil nach Anspruch 1,
**dadurch gekennzeichnet**,
daß mittels einer (T1) der beiden erstgenannten Tasten eine oberhalb der Normalebene (I) liegende, einen Informationsblock mit Zusatzanzeigen enthaltende Funktionsebene (II) einstellbar ist und mittels der zweiten (T2) dieser beiden Tasten zwei weitere, unterhalb der Normalebene (I) liegende, einen Bedien- und einen Programmierungsblock enthaltende Funktionsebenen (III, IV) mit jeweils mehreren Funktionsetagen ansteuerbar sind.

3. Bedienteil nach Anspruch 2,
**dadurch gekennzeichnet**,
daß mittels der die Funktionsebene (II) oberhalb der Normalebene (I) ansteuerbaren Taste (T1) zugleich eine unmittelbare Rückstellung aus jeder beliebigen Position der unterhalb der Normalebene (I) liegenden Funktionsebenen (III, IV) durchführbar ist.

4. Bedienteil nach Anspruch 2 oder 3,
**dadurch gekennzeichnet**,
daß die beiden unterhalb der Normalebene (I) liegenden Funktionsebenen (III, IV) jeweils direkt durch unterschiedlich langes Drücken der betreffenden Taste (T2) ansteuerbar sind.

5. Bedienteil nach einem der Ansprüche 1 bis 4,
**dadurch gekennzeichnet**,
daß die Funktionsebenen (II, III, IV) ober- und/oder unterhalb der Normalebene (I) untergliedert und die einzelnen nach Prioritätenstufung orientierten Etagen stufenweise durch die entsprechende Taste (T1 T2) ansteuerbar sind.

6. Bedienteil nach einem der Ansprüche 1 bis 5,
**dadurch gekennzeichnet**,
daß die Wähltasten (8) für die Wählfunktion mit Nummern-Symbolen versehen sind und für weitere Funktionen im Bereich unterhalb der jeweiligen Taste Buchstaben-Symbole angebracht sind, die durch eine entsprechende Kennzeichnung (Linienführung) als zu der betreffenden Taste gehörend markiert sind.

7. Bedienteil nach Anspruch 6,
**dadurch gekennzeichnet**,
daß die Funktionstasten (T1, T2) für die Ansteuerung der verschiedenen Funktionsebenen (II, III, IV) und -bereiche und die Kennzeichnungen für die Buchstaben-Symbole in gleicher Weise, beispielsweise durch gleiche Farbgebung, markiert sind.

## Claims

1. Operating element for a mobile radio telephone having a key panel and a display panel, the key panel comprising a group of dialling keys (8) and a group of function keys (7) for setting certain functions and the functions selected in each case being visually displayable on the display panel (6), characterised in that the group of function keys (7) contains at least two keys (T1, T2) by means of which, starting from a normal function level (I), at which the said dialling keys are used for inputting dialling signals, further function levels (information level (II), operating level (III) and programming level (IV)) can be selected at which the dialling keys are allocated other functions in a manner known per se, and in that the group of function keys contains a further key (3) by means of which special function areas can be selected within the respective function levels set by the first-mentioned keys (T1, T2).

2. Operating element according to Claim 1, characterised in that a function level (II), containing an information block with additional indications, located above the normal level (I), can be set by means of one (T1) of the two first-mentioned keys, and two further function levels (III, IV) having in each case several function tiers, containing an operating and programming block and located below the normal level (I), can be selected by means of the second key (T2) of these two keys.

3. Operating element according to Claim 2, characterised in that, at the same time, a direct resetting from any desired position of the function levels (III, IV) located below the normal level (I) can be carried out by means of the key (T1) by means of which the function level (II) above the normal level (I) can be selected.

4. Operating element according to Claim II or III, characterised in that the two function levels (III, IV) located below the normal level (I) can in each case be selected directly by pressing the relevant key (T2) for different lengths of time.

5. Operating element according to one of Claims 1 to 4, characterised in that the function levels (II, III, IV) above and/or below the normal level (I) are subdivided and the individual tiers oriented in accordance with priority grading can be selected step by step by the corresponding key (T1, T2).

6. Operating element according to one of Claims 1 to 5, characterised in that the dialling keys (8) for the dialling function are provided with number symbols and letter symbols, which are marked as belonging to the relevant key by corresponding identification (lines), are applied in the area below the respective key for other functions.

7. Operating element according to Claim 6, characterised in that the function keys (T1, T2) for selecting the various function levels (II, III, IV) and areas and the identifications for the letter symbols are marked in the same manner, for example by giving them the same colour.

## Revendications

1. Unité de commande pour un radiotéléphone mobile comportant un clavier et un panneau d'affichage, dans laquelle le clavier comporte un groupe de touches de sélection (8) et un groupe de touches de fonctions (7) pour régler des fonctions déterminées, et les fonctions respectivement commandées peuvent être représentées optiquement dans le panneau d'affichage (6), caractérisée par le fait que le groupe des touches de fonctions (7) comporte au moins deux touches (T1,T2), à l'aide desquelles peuvent être commandés, à partir d'un plan normal de fonctions (I), dans lequel lesdites touches de sélection servent à introduire les signaux caractéristiques de sélection, d'autres plans de fonctions (plan d'informations (II), plan de commande (III) et plan de programmation (IV)), dans lesquels d'autres fonctions sont associées de façon connue en soi aux touches de sélection, et que le groupe des touches de sélection comporte une touche supplémentaire (3), au moyen de laquelle des zones particulières de fonctions peuvent être commandées à l'intérieur des plans respectifs de fonctions, qui sont réglés par les touches (T1, T2) indiquées en premier lieu.

2. Unité de commande suivant la revendication 1, caractérisée par le fait qu'un plan de fontions II, qui est situé au-dessus du plan normal I et contient un bloc d'informations avec des indications supplémentaires, est réglable au moyen de l'une (T1) des deux touches mentionnées en premier lieu et que deux autres plans de fonctions (III, IV), qui sont situées au-dessous du plan normal I et contiennent un bloc de commande et un bloc de programmation et possèdent chacun plusieurs étages de fonctions, peuvent être commandés au moyen de la seconde (T2) de ces deux touches.

3. Unité de commande suivant la revendication 2, caractérisée par le fait que simultanément un retour direct à partir de n'importe quelle position des plans de fonctions (III, IV) situés au-dessous du plan normal (I), peut être exécuté au moyen de la touche (T1) qui permet de commander le plan de fonctions II au-dessus du plan normal I.

4. Unité de commande suivant la revendication 2 ou 3, caractérisé par le fait que les deux plans de fonctions (III, IV) situés au-dessous du plan normal (I) peuvent être respectivement commandés directement par un enfoncement de la touche considérée (T2), pendant une durée variable.

5. Unité de commande suivant la revendication 1 à 4, caractérisée par le fait que les plans de fonctions (II, III, IV) sont subdivisés au-dessus et/ou au-dessous du plan normal (I) et que les différents étages, orientés en fonction de l'échelonnement des priorités, peuvent être commandés par échelons au moyen de la touche correspondante (T1, T2).

6. Unité de commande suivant la revendication 1 à 5, caractérisée par le fait que les touches de sélection (8) sont pourvues, pour la fonction de sélection, de symboles formés de chiffres et que pour d'autres fonctions, dans la zone située au-dessous de la touche respective, sont disposés des symboles formés de lettres, qui sont marqués, par une caractérisation correspondante (tracé de lignes), comme étant associés à la touche concernée.

7. Unité de commande suivant la revendication 6, caractérisée par le fait que les touches de fonctions (T1,T2) pour la commande des différents plans de fonctions (II, III, IV) et des différentes zones de fonctions et les caractérisations pour les symboles en forme de lettres sont marqués de la même manière, par exemple avec une même couleur.
